# EUROPÄISCHE PATENTSCHRIFT

(11) **EP 2 498 157 B1**
(45) Veröffentlichungstag und Bekanntmachung des Hinweises auf die Patenterteilung: **13.01.2016**
(21) Anmeldenummer: 12158453.6
(22) Anmeldetag: 07.03.2012
(51) Int. Cl.: G05B 19/418, G05B 23/02

(54) **Steuerungsvorrichtung und Steuerungsverfahren für eine Maschine zur Herstellung stabförmiger Artikel der Tabak verarbeitenden Industrie**
Control apparatus and control method for a machine for producing rod-shaped articles of the tobacco-processing industry
Dispositif de commande et procédé de commande pour une machine de fabrication d'articles de l'industrie de traitement du tabac en forme de tige

(30) Priorität: 08.03.2011 DE 102011013661
(43) Veröffentlichungstag der Anmeldung: 12.09.2012
(73) Patentinhaber: HAUNI Maschinenbau AG, 21033 Hamburg (DE)
(72) Erfinder: Drews, Ingo, 21509 Glinde (DE); Koch, Hans-Henning, 21529 Kröppelshagen-Fahrendorf (DE)
(74) Vertreter: Stork Bamberger

(56) Entgegenhaltungen:
- EP-A1- 2 238 845
- DE-A1- 10 206 309
- DE-A1- 10 358 670
- DE-T2-602004 011 260

## Beschreibung

Die vorliegende Erfindung betrifft eine Steuerungsvorrichtung für eine Maschine oder eine Maschinenkombination zur Herstellung stabförmiger Artikel der Tabak verarbeitenden Industrie aus zumindest einem Materialstrang. Des Weiteren betrifft die Erfindung ein Steuerungsverfahren für eine Maschine oder eine Maschinenkombination zur Herstellung stabförmiger Artikel der Tabak verarbeitenden Industrie aus zumindest einem Materialstrang.

Solche Steuerungsvorrichtungen und Steuerungsverfahren kommen insbesondere bei der Steuerung von Zigarettenherstellungsmaschinen zum Einsatz. Die mittels einer Zigarettenmaschine hergestellten Produkte durchlaufen eine oder mehrere optische Qualitätskontrolle(n), um mögliche, während des Produktionsprozesses auftretende Fehler an den hergestellten Produkten erkennen zu können. Die EP 2 199 883 A1 beschreibt eine Überwachungsvorrichtung für eine Maschine zur Herstellung von Tabakprodukten. Die von der Maschine hergestellten Zigaretten werden mittels einer optischen Prüfeinrichtung einer Qualitätskontrolle unterzogen und auf mögliche Produktionsfehler hin untersucht. Die Parameter der von der optischen Prüfeinrichtung aufgenommen Bilder werden in einer Vergleichseinheit mit entsprechenden Parametern abgeglichen, die von einer selbstlernenden Einheit zur Verfügung gestellt werden.

Aus dem Dokument EP 2 238 845 A1 ist ein Verfahren zur optischen Kontrolle eines Umhüllungspapierstreifens der Tabak verarbeitenden Industrie bekannt, mittels derer sowohl in Strangmaschinen als auch in Filteransetzmaschinen jeweils optische Prüf-systeme zum Einsatz kommen, wie die aus dem Hause der Anmelderin stammenden Systeme ORIS für Strangmaschinen und OCIS für Filteransetzmaschinen.

Eine weiteres Verfahren sowie eine Vorrichtung zum Prüfen der Umhüllung von stabförmigen Artikeln der tabakverarbeitenden Industrie geht aus dem Dokument DE 102 06 309 A1 hervor. Zur Prüfung der Umhüllung wird der Strang durch eine Prüfzone einer Sensoreinrichtung gefördert und der Umhüllungspapierstreifen, der die Umhüllung des Strangs bildet, mit wenigstens einer zweiten Sensoreinrichtung geprüft.

Nachteilig ist, dass im Falle erkannter Produktionsfehler ein Bediener manuell in den Produktionsablauf eingreifen muss, um die entsprechenden Maschinenparameter der Zigarettenherstellungsmaschine zu korrigieren. Ferner ist es nicht möglich, in der Maschine den jeweiligen Bereich exakt zu lokalisieren, in dem der Produktionsfehler aufgetreten ist. So wird der Bediener lediglich über das Auftreten eines Produktionsfehlers informiert, erhält jedoch keine Informationen darüber, ob der Fehler bereits in dem zu verarbeitenden Ausgangsprodukten vorlag und/oder ob der Fehler auf einer Fehlfunktion der Maschine selbst beruht. Weiterhin ermöglichen bekannte Systeme, welche ausschließlich auf einer Parameterbewertung beruhen, keine Nachklassifikation, da keine Ursprungsbilder speicherbar sind.

Es ist daher Aufgabe der vorliegenden Erfindung, eine Vorrichtung vorzuschlagen, die mögliche Produktionsfehler zuverlässig erkennt und ein automatisches Eingreifen in den Produktionsablauf zu Korrektur möglicher Produktionsfehler gewährleistet. Des Weiteren besteht die Aufgabe darin, ein entsprechendes Verfahren vorzuschlagen.

Die Aufgabe wird durch die eingangs genannte Steuerungsvorrichtung dadurch gelöst, dass die Steuerungsvorrichtung zumindest ein erstes optoelektronisches Sensormittel umfasst, wobei das erste Sensormittel zum Erzeugen von Strangbilddaten zumindest eines Teiloberflächenbereichs des ersten Materialstrangs ausgebildet und eingerichtet ist, mindestens ein zweites optoelektronisches Sensormittel, wobei das zweite Sensormittel zum Erzeugen von Artikelbilddaten zumindest eines Teiloberflächenbereichs der stabförmigen Artikel ausgebildet und eingerichtet ist, eine erste Prüfeinrichtung, die mit mindestens einem der ersten Sensormittel mittels einer ersten Datenübertragungseinrichtung verbunden ist, wobei die erste Prüfeinrichtung zum Prüfen der Strangbilddaten und zum Klassifizieren der Strangbilddaten als Strangfehlerbilddaten, sofern bei dem Prüfen zumindest ein fehlerhafter Bereich des Materialstrangs festgestellt wird, andernfalls zum Klassifizieren der Strangbilddaten als Stranggutbilddaten ausgebildet und eingerichtet ist, eine zweite Prüfeinrichtung, die mit mindestens einem der zweiten Sensormittel mittel einer zweiten Datenübertragungseinrichtung verbunden ist, wobei die zweite Prüfeinrichtung zum Prüfen der stabförmigen Artikel und zum Klassifizieren der Artikelbilddaten als Artikelfehlerbilddaten, sofern bei dem Prüfen zumindest ein fehlerhafter Bereich der stabförmigen Artikel festgestellt wird, andernfalls zum Klassifizieren der Artikelbilddaten als Artikelgutbilddaten ausgebildet und eingerichtet ist, eine Analyseeinrichtung, die mit der ersten Prüfeinrichtung und der zweiten Prüfeinrichtung mittels einer dritten Datenübertragungseinrichtung verbunden ist und derart eingerichtet und ausgebildet ist, dass eine Analyse zumindest einer Bilddatenart aus der Gruppe der Strangfehlerbilddaten, der Stranggutbilddaten, der Artikelfehlerbilddaten und/oder der Artikelsollbilddaten mittels eines Maschinenmodells unter Berechnung zumindest eines Korrekturwerts erfolgt, ein Steuerungsmittel, das mit der Analyseeinrichtung mittels einer weiteren Datenübertragungseinrichtung verbunden ist und derart eingerichtet und ausgebildet ist, dass auf Basis des Korrekturwerts eine Korrektur zumindest eines vorbestimmten Parameters der ersten Prüfeinrichtung und/oder der zweiten Prüfeinrichtung erfolgt, wobei die Steuerungsvorrichtung eine Zuordnungseinrichtung umfasst, die mit mindestens einem der ersten optoelektronischen Sensormittel und mindestens einem der zweiten optoelektronischen Sensormittel verbunden ist und zum Zuordnen der Strangbilddaten eines jeden Abschnitts des mindestens einen Materialstrangs zu den Artikelbilddaten des jeweils zugehörigen stabförmigen Artikels und Erzeugen eines Bilddatenpaares, wobei jedes der Bilddatenpaare die jeweiligen Artikelbilddaten und die jeweiligen Strangbilddaten umfasst, ausgebildet und eingerichtet ist. Damit ist es möglich, die mittels des ersten optoelektronischen Sensormittels erfassten Strangbilddaten mit den mittels des zweiten optoelektronischen Sensormittels erfassten Artikelbilddaten miteinander zu korrelieren bzw. zueinander in Beziehung zu setzen und gemeinsam mittels der dazu entsprechend eingerichteten Analyseeinrichtung auszuwerten. Dies bietet den Vorteil, dass auf Basis der Strangbilddaten und der Artikelbilddaten mittels der Analyseeinrichtung Rückschlüsse hinsichtlich einer automatischen Optimierung vorbestimmter Parameter der Maschine gezogen werden können. Es findet daher keine voneinander losgelöste und isolierte Einzelbewertung hinsichtlich der Qualität oder dem Vorhandensein von Fehlern des Materialstrangs bzw. der stabförmigen Artikel statt. Vielmehr ist die Analyseeinrichtung derart eingerichtet und ausgebildet, dass eine automatische Anpassung vorbestimmter Parameter zur Optimierung der Qualität der mit der Maschine produzierten stabförmigen Artikel auf Grundlage einer Gesamtschau von Strangbilddaten und Artikelbilddaten erfolgt.

Auf der einen Seite dient die Zuordnungseinrichtung dem Ausgleich derjenigen Zeitspanne, die von der Abtastung der Oberfläche eines Materialstrangabschnitts bis zur Abtastung der Oberfläche eines aus diesem Materialstrangabschnitt produzierten stabförmige Artikels vergeht. Andererseits ist die Zuordnungseinrichtung derart ausgebildet, dass diese die Artikelbilddaten und die Strangbilddaten als korrespondierende Bildpaaren erzeugt, so dass die Bildpaare sowohl Bilddaten der Oberfläche eines jeweiligen stabförmigen Artikels als auch Bilddaten desjenigen Materialstrangabschnitts umfassen, aus dem dieser stabförmige Artikel produziert worden ist.

Eine bevorzugte Weiterbildung der Erfindung zeichnet sich dadurch aus, dass jedes der zweiten Sensormittel mindestens vier Bildsensoren umfasst, wobei jeder Bildsensor einem Teilabschnitt des mindestens einen Teiloberflächenbereichs der stabförmigen Artikel zugeordnet ist. Anders ausgedrückt ist jeder Bildsensor einem Teilbereich der stabförmigen Artikel, beispielsweise einem 90° Abschnitt, zugeordnet. Jeder der Bildsensoren ist also derart eingerichtet, dass dieser einen Teilabschnitt des jeweiligen stabförmigen Artikels erfasst. Die Bildsensoren sind dazu entsprechend versetzt angeordnet, so dass jedem Bildsensor ein entsprechender Teilabschnitt des stabförmigen Artikels zugeordnet ist. Auf diese Weise werden insgesamt alle Bereiche der stabförmigen Artikel erfasst.

In einer weiteren bevorzugten Ausbildung der Erfindung sind die Bildsensoren mit einer Zusammenführungseinrichtung verbunden, die zum Zusammenführen der von den Bildsensoren abgetasteten Teilabschnitte zu einem durch die Artikelbilddaten repräsentierten Gesamtbild des mindestens einen Teiloberflächenbereichs ausgebildet und eingerichtet ist. Mit anderen Worten ist die Zusammenführungseinrichtung derart eingerichtet, dass die mittels jedem der Bildsensoren abgetasteten Teilabschnitte zu einem Gesamtbild zusammengefügt werden. Die mittels der Zusammenführungseinrichtung erzeugten Artikelbilddaten umfassen daher Bilddaten, die einer 360°-Aufnahme der Oberfläche der stabförmigen Artikel entsprechen.

Eine zweckmäßige Ausgestaltung der Erfindung ist dadurch gekennzeichnet, dass die Analyseeinrichtung eine Fehlertypklassifizierungseinrichtung umfasst, die zum Zuordnen der Strangfehlerbilddaten und der Artikelfehlerbilddaten in mehrere vorgegebene Fehlertypklassen ausgebildet und eingerichtet ist. Damit können während der Produktion der stabförmigen Artikel auftretende Fehler eindeutig identifiziert und exakt der oder die Bereich(e) in der Maschine lokalisiert werden, die für den Fehler in oder an dem stabförmigen Artikel bzw. dem Materialstrang ursächlich ist.

Eine bevorzugte Weiterbildung der Erfindung zeichnet sich dadurch aus, dass die Steuervorrichtung weiter einen Stempelpositionssensor, der zum Ermitteln einer Aufdruckposition eines Stempeldrucks auf dem mindestens einen Materialstrang und/oder dem stabförmigen Artikel eingerichtet und ausgebildet ist, und eine Positionsbestimmungseinrichtung umfasst, die zum Ermitteln einer relativen Position des mindestens einen Materialstrangsabschnitts und/oder des stabförmigen Artikels bezüglich des ersten Sensormittels und/oder des zweiten Sensormittels zu einem jeweiligen Abtastzeitpunkt des ersten und/oder des zweiten Sensormittels basierend auf der ermittelten Aufdruckposition eingerichtet und ausgebildet ist. Auf diese Weise kann die exakte Position des Materialstrangabschnitts und/oder der stabförmigen Artikel zu den besagten Abtastzeitpunkten exakt und mit hoher Genauigkeit bestimmt werden.

Gemäß einer weiteren bevorzugten Ausbildung der Erfindung umfasst die Steuervorrichtung weiter eine Vergleichseinrichtung, die zum Vergleichen der relativen Position des Materialstrangabschnitts und/oder des stabförmigen Artikels mit einer vorgegebenen Position und im Fall einer Abweichung zwischen der relativen Position und der vorgegebenen Position zum Korrigieren der Strangbilddaten und/oder der Artikelbilddaten anhand der ermittelten relativen Position ausgebildet und eingerichtet ist. Dies wirkt sich besonders vorteilhaft auf die Genauigkeit der Erkennung und Bewertung von Fehlern in dem Materialstrang und/oder in den stabförmigen Artikeln mittels der Analyseeinrichtung aus, da selbst geringe sich auf die Qualität der Strang- bzw. Artikelbilddaten auswirkende Positionsungenauigkeiten mittels der Vergleichseinrichtung kompensiert werden können.

Gemäß einer weiteren bevorzugten Ausführungsform umfasst die Steuervorrichtung weiter zumindest eine Speichereinrichtung, die zum kontinuierlichen und/oder selektiven Zwischenspeichern zumindest eines Datentyps aus der Gruppe der Strangfehlerbilddaten, der Stranggutbilddaten, der Artikelfehlerbilddaten und der Artikelgutbilddaten angepasst und eingerichtet ist. Dies bietet den Vorteil, dass eine Vielzahl von Bilddaten erfasst und zeitweilig oder dauerhaft gespeichert werden kann, auf die seitens der Analyseeinrichtung ein Zugriff erfolgt, um die gespeicherten Bilddaten in die Analyse einfließen zu lassen. Anders ausgedrückt ist die Analyseeinrichtung derart eingerichtet, dass in dieser nicht nur eine Bewertung der entsprechenden aktuell aufgenommen Bilddaten der stabförmigen Artikel bzw. des Materialstrangs, sondern auch eine Bewertung und Analyse, insbesondere eine Zweit- bzw. Nachanalyse, von in der Speichereinrichtung bereits gespeicherten Bilddaten erfolgt.

Des Weiteren wird die Aufgabe durch das eingangs genannte Steuerungsverfahren mit den Merkmalen des Anspruchs 8 gelöst. Die sich daraus ergebenden Vorteile wurden bereits im Zusammenhang mit der Vorrichtung zur Durchführung des Verfahrens erläutert, weshalb zur Vermeidung von Wiederholungen auf die entsprechenden Passagen verwiesen wird.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. Darin zeigt:
- Fig. 1: eine schematischen Darstellung einer Maschinekombination zur Herstellung stabförmiger Artikel der Tabak verarbeitenden Industrie mit jeweils vergrößert dargestellten ersten und zweiten optoelektronischen Sensormitteln gemäß einer bevorzugten Ausführungsform,
- Fig. 2: eine schematischen Darstellung zur Herstellung und Weiterverarbeitung von zwei Materialsträngen in der in Figur 1 gezeigten Maschinekombination zur Herstellung stabförmiger Artikel,
- Fig. 3: ein Blockschaltbild der erfindungsgemäßen Steuerungsvorrichtung der Maschinekombination gemäß Figur 1 und
- Fig. 4: eine schematische Darstellung der Helligkeitsverteilung beim Abtasten eines stabförmigen Artikels mittels eines optoelektronischen Sensormittels,
- Fig. 5: ein Ablaufdiagramm zur Veranschaulichung des Grundprinzips der erfindungsgemäßen Steuerungsvorrichtung sowie des Steuerungsverfahrens.

Die vorliegende Erfindung bzw. die in den Figuren dargestellte Steuerungsvorrichtung bzw. das Steuerungsverfahren sind besonders geeignet zur Steuerung einer Maschinenkombination zur Herstellung stabförmiger Artikel der Tabak verarbeitenden Industrie, insbesondere zur Steuerung von Zigarettenherstellungsmaschinen, beispielsweise vom Typ Protos aus dem Hause der Anmelderin. Jedoch ist die vorliegende Erfindung nicht allein auf eine Vorrichtung bzw. ein Verfahren zur Steuerung von Zigarettenmaschinen beschränkt, sondern für jede Maschine geeignet, die stabförmige Artikel der Tabak verarbeitenden Industrie produziert bzw. verarbeitet, insbesondere auch für Filter- und Multifilterherstellungsmaschinen. Stabförmige Artikel der Tabak verarbeitenden Industrie umfassen neben den genannten Filterzigaretten eine Vielzahl von weiteren Artikeln, beispielsweise Filterstäbe, Multifilterstäbe, Plainzigaretten, Zigarillos mit und ohne Filter und dergleichen, so dass auch das erfindungsgemäße Verfahren sowie die Vorrichtung zur Steuerung entsprechender Maschinen geeignet sind.

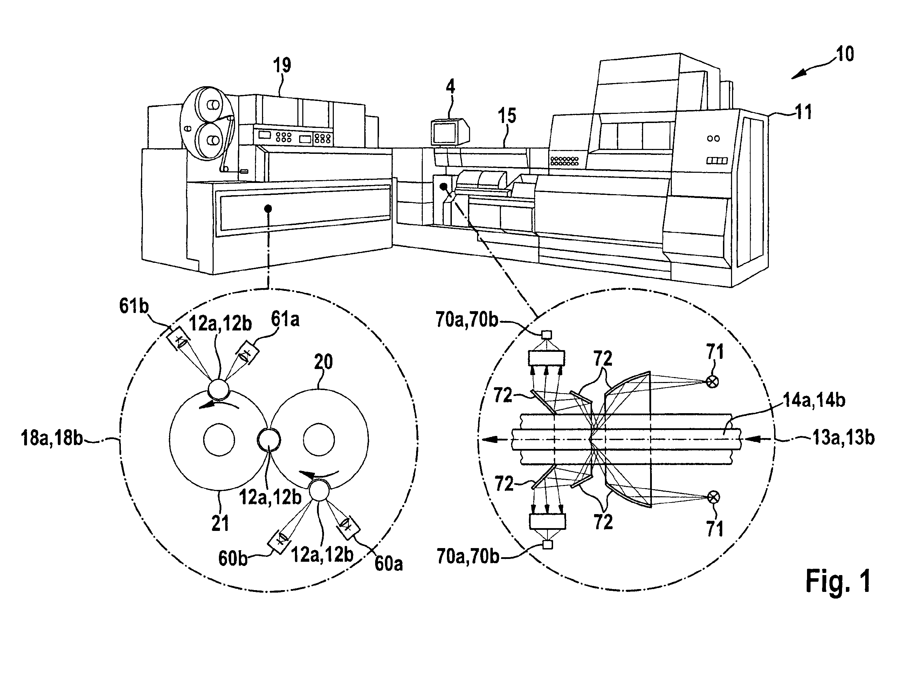

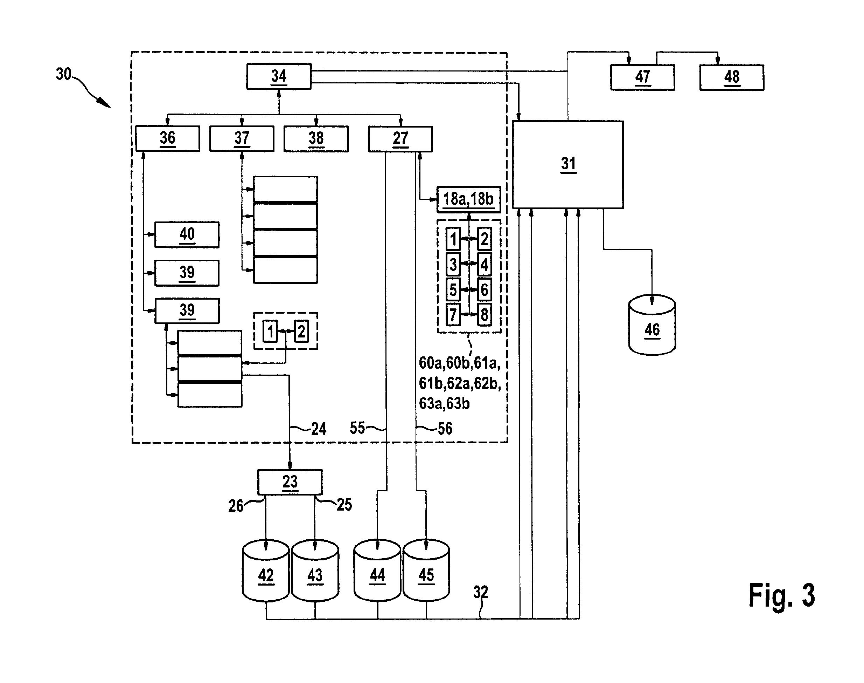

Im Folgenden werden die erfindungsgemäße Steuerungsvorrichtung sowie das Steuerungsverfahren anhand der Figuren näher erläutert. Die Figur 1 zeigt eine schematische Darstellung einer Maschine 10 zur Herstellung stabförmiger Artikel 12 der Tabak verarbeitenden Industrie, beispielsweise eine Zigarettenherstellungsmaschine vom Typ Protos aus dem Hause der Anmelderin. Die Maschine 10 umfasst eine Steuerungsvorrichtung 30 (siehe Figur 3) mit einem ersten optoelektronischen Sensormittel 13a, 13b, das zur optischen Abtastung eines Materialstrangs 14 und zur Erzeugung von Strangbilddaten mittels einer Verarbeitungseinrichtung 2 ausgebildet und eingerichtet ist. Vorzugsweise umfassen die Strangbilddaten die gesamte Oberfläche des Materialstrangs 14, repräsentieren also ein lineares bzw. zweidimensionales Abbild der gesamten Oberfläche des Materialstrangs 14. Alternativ ist es auch möglich, dass das erste optoelektronische Sensormittel 13a, 13b derart eingerichtet ist, dass jeweils nur ein Teiloberflächenbereich der Materialstränge 14a, 14b erfasst und abgebildet wird. Bevorzugt kommt als erstes optoelektronisches Sensormittel 13 das ORIS-XR-System aus dem Hause der Anmelderin zum Einsatz. Es ist jedoch auch jedes andere optoelektronische Sensormittel 13a, 13b geeignet, welches eine optische Abtastung bzw. Aufnahme zumindest einer Teiloberfläche des jeweiligen Materialstrangs 14a, 14b und eine entsprechende Umwandlung der abgetasteten Teil- und/oder Gesamtoberfläche des Materialstrangs 14 in die entsprechenden Strangbilddaten erlaubt. Zur Umwandlung des jeweils abgetasteten Oberflächenbildes des Materialsstrangs 14a, 14b umfasst das erste optoelektronische Sensormittel 13a, 13b zumindest einen Bildsensor 70a, 70b, beispielsweise in Form einer CCD-Kamera und/oder einer CCD-Zeilenkamera. Die mittels des Bildsensors 70a, 70b erzeugten Strangbilddaten liegen vorzugsweise als digitales Bildsignal vor, bzw. werden aus einem analogen Bildsignal mittels einem dem Bildsensor nachgeordneten Analog-/Digitalwandler in die Strangsbilddaten in digitaler Form umgewandelt. Die abzutastende Teiloberfläche des Materialstrang 14a, 14b wird über eine Spiegelanordnung 72 mit Licht einer Lichtquellen 71 beleuchtet und das von der Teiloberfläche reflektierte Licht von den Bildsensoren 70a, 70b aufgenommen und in entsprechende Strangbilddaten umgewandelt.

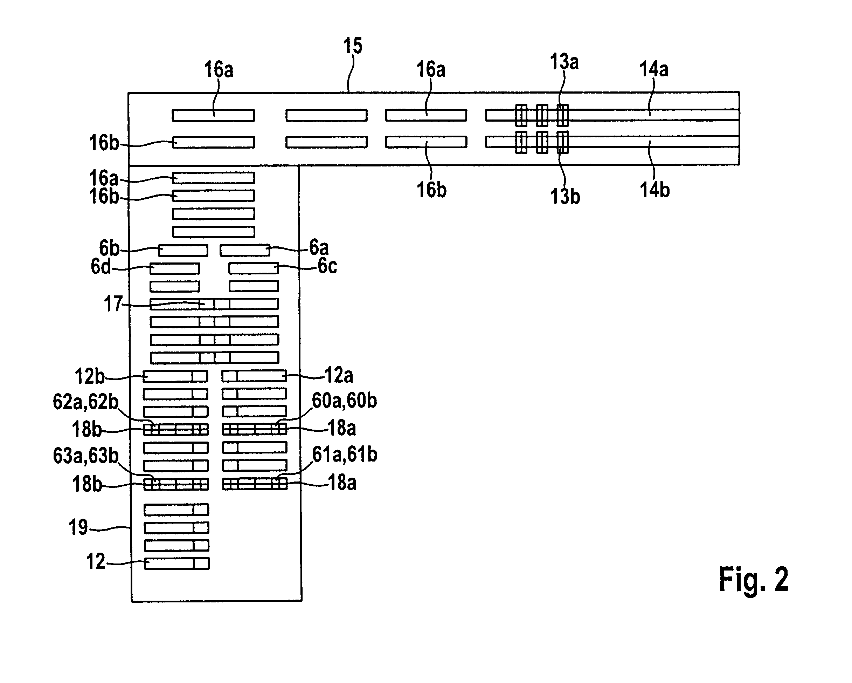

Wie aus der Figur 2 ersichtlich ist, handelt es sich bei der Maschine 10 gemäß der gezeigten Ausführungsform um eine Zweistrangmaschine. In diesem Fall weist die Maschine 10 jeweils zwei der ersten optoelektronischen Sensormitteln 13a, 13b zur Abtastung zweier Materialsträngen 14a, 14b auf, um entsprechend von beiden der Materialstränge 14a, 14b Strangbilddaten zu erzeugen. Die Erfindung ist jedoch nicht ausschließlich auf Maschinen 10 zur Herstellung von zwei Materialsträngen 14a, 14b beschränkt. Vielmehr ist die Erfindung für Einstrangmaschinen und für Maschinen mit mehr als zwei zu verarbeitenden Materialsträngen geeignet. Zur Abtastung der Materialstränge 14a, 14b sind die ersten Sensormittel 13a, 13b bevorzugt unmittelbar in der Umgebung des Materialstrangs 14a bzw. des Materialstrangs 14b angeordnet.

Die in den Figuren 1 und 2 gezeigte Maschine 10 umfasst eine Verteilereinheit 11 und eine Strangeinheit 15, in der von einer nicht gezeigten externen Beschickungsanlage geförderter Schnitttabak aufbereitet und zu zwei Tabaksträngen verarbeitet wird, die längsaxial durch die Maschine 10 gefördert werden. Anschließend erfolgt eine Umhüllung der Tabakstränge mit Papier zu den in der Figur 2 gezeigten Materialsträngen 14a, 14b, der in der Folge in Tabakstöcke 16a, 16b doppelter Gebrauchslänge geschnitten wird. Der Strangeinheit 15 ist eine mehrbahnige Filteransetzmaschine 19, beispielsweise vom Typ MAX aus dem Hause der Anmelderin, nachgeordnet. Die Tabakstöcke 16a, 16b doppelter Gebrauchslänge werden in der Filteransetzmaschine 19 queraxial gefördert und in Tabakstöcke 6a, 6c bzw. 6b, 6d einfacher Gebrauchslänge geschnitten und nachfolgend in getrennten Bahnen weiter gefördert. Nach dem anschließenden Durchtrennen der Doppelzigaretten erhält man jeweils zwei der stabförmigen Artikel 12a, 12b in Form von Zigaretten.

Die Steuerungsvorrichtung 30 weist ferner ein zweites optoelektronischen Sensormittel 18 auf, das zum Erzeugen von Artikelbilddaten zumindest eines Teiloberflächenbereichs der stabförmigen Artikel 12 ausgebildet und eingerichtet ist. Vorzugsweise umfassen die Artikelbilddaten die gesamte Oberfläche jedes der stabförmigen Artikel 12, repräsentieren also ein lineares bzw. zweidimensionales Abbild der gesamten Oberfläche des Artikels 12. Alternativ ist es auch möglich, dass das zweite optoelektronische Sensormittel 18 derart eingerichtet ist, dass nur ein Teiloberflächenbereich der stabförmigen Artikel 12 erfasst und abgebildet wird.

Bevorzugt wird als zweites optoelektronisches Sensormittel 18 das "Optical Cigarette Inspection System" (OCIS) aus dem Hause der Anmelderin verwendet. Selbstverständlich ist jedoch auch jedes andere optoelektronische Sensormittel geeignet, das eine optische Abtastung bzw. Aufnahme zumindest einer Teiloberfläche des Artikels und Umwandlung in die entsprechenden Artikelbilddaten erlaubt. Zur Umwandlung des abgetasteten Oberflächenbildes der stabförmigen Artikel 12 umfasst das zweite optoelektronische Sensormittel 18 zumindest einen Bildsensor, beispielsweise in Form einer CCD-Kamera und/oder einer CCD-Zeilenkamera. Die mittels des Bildsensors erzeugten Artikelbilddaten liegen vorzugsweise als digitales Bildsignal vor, bzw. werden aus einem anlogen Bildsignal mittels einem dem Bildsensor nachgeordneten Analog-/Digitalwandler in die digitalen Artikelbilddaten umgewandelt. Aufgrund der queraxialen Förderung der stabförmigen Artikel 12, die vorzugsweise mittels Fördertrommeln 20 erfolgt, umfasst das zweite optoelektronische Sensormittel 18a, 18b mehr als einen Bildsensor. Vorzugsweise umfasst jedes der zweiten Sensormittel 18a, 18b mindestens vier Bildsensoren 60a, 60b, 61 a, 61 b, wobei jeder Bildsensor 60a, 60b, 61a, 61b einem Teilabschnitt des mindestens einen Teiloberflächenbereichs der stabförmigen Artikel zugeordnet ist. Mit anderen Worten weist das zweite optoelektronische Sensormittel 18a, 18b insgesamt acht Bildsensoren auf, nämlich jeweils vier für eine Förderbahn 60a, 60b, wobei für eine Bahn jeweils zwei erste Teilbildkameras 60a, 62a, 60b, 62b, die einer Fördertrommel 20 zugeordnet sind und zwei zweite Teilbildkameras 61a, 63a, 61b, 63b, die einer zweiten Fördertrommel 21 zugeordnet sind, vorgesehen sind. Jede der Teilbildkameras 60a, 60b, 61a, 61b, 62a, 62b, 63a, 63b ist derart eingerichtet, dass diese einen 90°-Abschnitt der Oberfläche der stabförmigen Artikel 12 erfassen. Durch die in der Figur 1 im Ausschnitt gezeigte Anordnung der Fördertrommeln 20, 21 sowie der ersten und zweiten Teilbildkameras 60a, 60b, 61a, 61b, 62a, 62b, 63a, 63b ist es möglich, die gesamte Oberfläche eines stabförmigen Artikels 12 einer ersten Reihe aus den von den vier Teilbildkameras 60a, 60b, 61 a, 61 b sowie einer zweiten Reihe aus den vier Teilbildkameras 62a, 62b, 63a, 63b aufgenommenen Teilbildern zusammenzusetzen. Vorzugsweise sind die Bildsensoren 60a, 60b, 61a, 61b, 62a, 62b, 63a, 63b mit einer Zusammenführungseinrichtung 65 verbunden, beispielsweise über entsprechende Datenleitungen. Die Zusammenführungseinrichtung 65 ist derart eingerichtet, dass die von den Bildsensoren 60a, 60b, 61a, 61b, 62a, 62b, 63a, 63b abgetasteten Teilabschnitte zu den Artikelbilddaten zusammengeführt werden, so dass die Artikelbilddaten einem Gesamtbild eines Teiloberflächenbereichs der stabförmigen Artikel 12 entsprechen. Mit anderen Worten ist das zweite optoelektronische Sensormittel 18a, 18b derart ausgebildet und eingerichtet, dass mittels des zweiten optoelektronischen Sensormittels 18a, 18b ein zweidimensionales Bild in Form der Artikelbilddaten erzeugt wird, die vorzugsweise die gesamte Oberfläche jeweils eines stabförmigen Artikel 12 repräsentieren. Alternativ sind die ersten und zweiten optoelektronischen Sensormittel 13a, 13b, 18a, 18b zur dreidimensionalen Abtastung ausgebildet und eingerichtet. Die mittels der optoelektronischen Sensormittel 13a, 13b, 18a, 18b erzeugten Artikelbild- bzw. Strangbilddaten umfassen in diesem Fall neben einer reine Farb- und/oder Helligkeitsbildinformation zusätzlich Daten über die räumliche Oberflächenbeschaffenheit. Selbstverständlich ist das zweite optoelektronische Sensormittel 18a, 18b nicht auf die vorstehend genannte und in der Figur 1 gezeigte Anordnung der Teilbildkameras 60a, 60b, 61a, 61b, 62a, 62b, 63a, 63b beschränkt. Vielmehr ist als zweites optoelektronisches Sensormittel 18a, 18b jede beliebige Anordnung von einer oder mehreren Teilbildkameras mit abweichenden Erfassungswinkeln, beispielsweise 120° oder 180°, geeignet, um die Artikelbilddaten zu erzeugen. Besonders bevorzugt ist das zweite optoelektronische Sensormittel 18a 18b ferner derart ausgebildet und eingerichtet, dass jeweils nicht nur einer der stabförmigen Artikel 12 erfasst wird, sondern mittels eines der zweiten optoelektronischen Sensormittel 18 jeweils die Oberflächen zweier Doppelzigaretten, d.h. insgesamt die Artikelbilddaten von jeweils vier der stabförmigen Artikel 12 erfasst werden. Sowohl das erste als auch das zweite optoelektronische Sensormittel 12, 18 ist zur Abtastung des Materialstrangs 14 bzw. der stabförmigen Artikel 12 mittels Licht im sichtbaren und/oder infraroten Spektrum ausgebildet und eingerichtet.

Vorzugsweise umfasst die Steuerungsvorrichtung 30 eine Zuordnungseinrichtung 65, die mit mindestens einem der ersten optoelektronischen Sensormittel 13a, 13b und mindestens einem der zweiten optoelektronischen Sensormittel 18a, 18b verbunden ist. Die Zuordnungseinheit 65 ist derart eingerichtet und ausgebildet, dass die Strangbilddaten eines jeden Abschnitts des mindestens einen Materialstrangs 14a, 14b zu den Artikelbilddaten der jeweils zugehörigen stabförmigen Artikels 12 zugeordnet und entsprechende Bilddatenpaare erzeugt werden, wobei jedes der Bilddatenpaare die jeweiligen Artikelbilddaten und die jeweiligen Strangbilddaten umfasst. Dazu weist die Zuordnungsvorrichtung beispielsweise mindestens einen Zwischenspeicher auf, der als FIFO-Speicher eingerichtet ist.

Die Figur 3 zeigt ein Blockschaltbild der erfindungsgemäßen Steuerungsvorrichtung 30.

Die Steuerungsvorrichtung 30 umfasst eine erste Prüfeinrichtung 23, die mit den ersten optoelektronischen Sensormitteln 13a, 13b mittels einer ersten Datenübertragungseinrichtung 24 verbunden ist. Vorzugsweise sind zwischen dem ersten optoelektronischen Sensormittel 13a, 13b und der ersten Prüfeinrichtung 23 weitere Signalverarbeitungseinrichtungen angeordnet, beispielsweise Analog-Digitalwandler und/oder Bildverarbeitungseinrichtungen, die beispielsweise entsprechend angepasst sind, um aus mehreren Teilbildern ein Gesamtbild der jeweiligen Oberfläche der Materialstränge 14a, 14b in Form der Strangbilddaten zu erzeugen. Mittels der zum Prüfen und Klassifizieren der Strangbilddaten eingerichteten Prüfeinrichtung 23 werden die Strangbilddaten auf das Vorhandensein von Strangbildfehlern überprüft, beispielsweise auf das Vorhandensein von Flecken im Umhüllungspapier, von unerwünschten Tabakresten in der Papiernaht, von nicht ordnungsgemäßen Klebestellen des Umhüllungspapiers, durchstoßenen Tabakrippen, Flecken auf dem Zigarettenpapier, Papierresten im Tabak und dergleichen. Dazu weist die Prüfeinrichtung 23 eine oder mehrere digitale Bildfehlererkennungseinrichtung(en) auf, wobei die Bilderfehlererkennungseinrichtungen jeweils zur Erkennung bestimmter Strangbildfehler ausgebildet und eingerichtet sind. Als Bildfehlererkennungseinrichtungen sind sämtliche bekannten Vorrichtungen zur digitalen Bildverarbeitung geeignet, die eine Erkennung der entsprechenden Fehler erlauben. So kann die Bildfehlererkennungseinrichtung beispielsweise als Bildkorrelator zum Vergleichen bekannter Fehlerbilder mit den zu prüfenden Strangbilddaten, als neuronales Netz oder als digitales Filter oder dergleichen ausgebildet sein. Sofern bei dem Prüfen mittels der ersten Prüfeinrichtung 23 ein fehlerhafter Bereich einer der Materialstränge 14a, 14b festgestellt wird, werden die entsprechenden Strangbilddaten als Strangfehlerbilddaten, andernfalls als Stranggutbilddaten klassifiziert. Dazu kann die erste Prüfeinrichtung 23 beispielsweise eine Signatureinrichtung aufweisen, die die Strangbilddaten zur Kennzeichnung als Strangfehlerbilddaten oder als Stranggutbilddaten entsprechend kennzeichnet, indem den Strangbilddaten ein entsprechender Digitalkode mittels der ersten Prüfeinrichtung 23 zugeordnet wird. Gemäß der in der Figur 3 gezeigten bevorzugten Ausführungsform weist die erste Prüfeinrichtung 23 entsprechende Mittel zum Einteilen der Strangbilddaten entsprechend der erfolgten Klassifikation in die Strangfehlerbilddaten und die Stranggutbilddaten auf, indem die Strangfehlerbilddaten an einem ersten Ausgang 25 der ersten Prüfeinrichtung 23 bzw. die Stranggutbilddaten an einem zweiten Ausgang 26 der ersten Prüfeinrichtung 23 bereitgestellt werden.

Des Weiteren umfasst die Steuerungsvorrichtung 30 eine zweite Prüfeinrichtung 27, die mit dem zweiten optoelektronischen Sensormittel 18 mittels einer zweiten Datenübertragungseinrichtung 28 verbunden ist. Ggf. sind zwischen dem zweiten optoelektronischen Sensormittel 18 und der zweiten Prüfeinrichtung 27 weitere Signalverarbeitungseinrichtungen angeordnet, beispielsweise Analog-/Digitalwandler und/oder Bildverarbeitungseinrichtungen, die entsprechend angepasst sind, um aus mehreren Teilbildern ein Gesamtbild der Oberfläche jeweils eines der stabförmigen Artikel 12 in Form der Artikelbilddaten zu erzeugen. Mittels der zum Prüfen und Klassifizieren der Artikelbilddaten eingerichteten zweiten Prüfeinrichtung 27, werden die Artikelbilddaten auf das Vorhandensein von Artikelbildfehlern überprüft, beispielsweise auf das Vorhandensein von Flecken im Umhüllungspapier, von unerwünschten Tabakresten in der Papiernaht, von nicht ordnungsgemäßen Klebestellen des Umhüllungspapiers, durchstoßenen Tabakrippen, Flecken auf dem Zigarettenpapier, Papierresten im Tabak sowie auf das Vorhandensein weiterer Fehler, die auf dem Produktionsweg mindestens eines Materialstrangs 14a, 14b zum stabförmigen Artikel 12 auftreten können. Dazu weist die Prüfeinrichtung 27 eine oder mehrere digitale Bildfehlererkennungseinrichtung auf, wobei die Bilderfehlererkennungseinrichtungen jeweils zur Erkennung bestimmter Artikelbildfehler ausgebildet und eingerichtet sind. Als Bildfehlererkennungseinrichtungen können sämtliche bekannten Vorrichtungen zur digitalen Bildverarbeitung zum Einsatz kommen, die eine Erkennung der entsprechenden Fehler erlauben. So kann die Bildfehlererkennungseinrichtung als Bildkorrelator zum Vergleichen bekannter Fehlerbilder mit den zu prüfenden Artikelbilddaten, als neuronales Netz, oder als digitales Filter oder dergleichen ausgebildet sein. Sofern bei dem Prüfen mittels der zweiten Prüfeinrichtung 27 ein fehlerhafter Bereich der stabförmigen Artikel 12 festgestellt wird, werden die entsprechenden Artikelbilddaten als Artikelfehlerbilddaten, andernfalls als Artikelgutbilddaten klassifiziert. Dazu kann die zweite Prüfeinrichtung 27 beispielsweise eine weitere Signatureinrichtung aufweisen, die die Artikelbilddaten zur Kennzeichnung als Artikelfehlerbilddaten oder als Artikelgutbilddaten entsprechend kennzeichnet, indem den Artikelbilddaten mittels der zweiten Prüfeinrichtung 27 ein entsprechender Digitalkode zugeordnet wird. Gemäß der in der Figur 3 gezeigten bevorzugten Ausführungsform weist die zweite Prüfeinrichtung 27 entsprechende Mittel zum Aufteilen der Artikelbilddaten entsprechend der erfolgten Klassifikation in Artikelfehlerbilddaten und Artikelgutbilddaten auf, indem die Artikelfehlerbilddaten an einem ersten Ausgang 55 der zweiten Prüfeinrichtung 27 bzw. die Artikelgutbilddaten an einem zweiten Ausgang 56 der zweiten Prüfeinrichtung 27 bereitgestellt werden.

Die Steuerungsvorrichtung 30 umfasst weiter eine Analyseeinrichtung 31, die mit der ersten Prüfeinrichtung 23 und der zweiten Prüfeinrichtung 27 mittels einer dritten Datenübertragungseinrichtung 32 verbunden ist. Bevorzugt ist die Datenübertragungseinrichtung 32 als Bussystem ausgebildet und zum Übertragen der Strangfehlerbilddaten, der Stranggutbilddaten, der Artikelfehlerbilddaten und/oder der Artikelgutbilddaten von den jeweiligen Ausgängen 25, 26 bzw. 55, 56 der entsprechenden Prüfeinrichtungen 23 bzw. 27 an die Analyseeinrichtung 31 geeignet. Die Analyseeinrichtung 31 ist derart ausgebildet, dass eine Analyse zumindest einer Datenart aus der Gruppe der Strangfehlerbilddaten, der Stranggutbilddaten, der Artikelfehlerbilddaten und/oder der Artikelgutbilddaten mittels eines Maschinenmodells unter Berechnung zumindest eines Korrekturwerts erfolgt. Beispielsweise ist die Analyseeinrichtung 31 derart ausgebildet, dass die Strangfehlerbilddaten mit den korrespondierenden Artikelfehlerbilddaten analysiert werden, d.h. es erfolgt eine (Nach-)Bewertung der Bilddaten eines mittels der ersten Prüfeinrichtung 23 erkannten Fehlers an dem mindestens einen Materialstrang 14a, 14b und der Bilddaten eines daraus im Produktionsprozess hergestellten und als fehlerhaft mittels der zweiten Prüfeinrichtung 27 erkannten stabförmigen Artikels 12. Die Analyseeinrichtung 31 ist nicht ausschließlich auf die Analyse von Strangfehlerbilddaten mit den korrespondierenden Artikelfehlerbilddaten beschränkt. Vielmehr kann jede Kombination aus Strangfehlerbilddaten, Stranggutbilddaten, Artikelfehlerbilddaten und/oder Artikelgutbilddaten mit einem oder mehren der genannten Bilddaten verknüpft und zur Analyse mittels der Analyseeinrichtung 31 herangezogen werden. Anders ausgedrückt ist die Analyseeinrichtung 31 zur Bewertung der Artikelbilddaten und der Strangbilddaten anpasst. Die Analyseeinrichtung erfüllt damit die Funktion einer Nachklassifikation- bzw. Nachbewertungseinrichtung basierend auf den bereits mittels der ersten Prüfeinrichtung 23 und der zweiten Prüfeinrichtung 27 zuvor bewerteten Bildern. Die Analyseeinrichtung 31 ist ferner derart eingerichtet, dass mittels des beispielsweise in einer Datenbank hinterlegten Maschinenmodells die Berechnung eines Korrekturwerts oder mehrerer Korrekturwerte erfolgt.

Die Analyseeinrichtung 31 ist mittels einer weiteren Datenübertragungseinrichtung 33 mit einem Steuermittel 34 verbunden. Optional umfasst das Steuermittel 34 eine Visualisierungs- und Bedieneinheit 4, beispielsweise in Form eines Touch-Screens. Das Steuermittel 34 ist einerseits zur Steuerung der Maschine 10 eingerichtet und ausgebildet. Anders ausgedrückt handelt es sich bei dem Steuermittel 34 vorzugsweise um eine zentrale Maschinensteuereinheit mittels derer die Maschine 10 unter anderem auf Basis eines oder mehrerer vorbestimmter Parameter gesteuert wird. Diese Parameter umfassen beispielsweise Maschinen-, Produkttyp-, Messsystem- und/oder Markenparameter. Beispielsweise umfassen Produkttypparameter Größen wie Durchmesser, Länge, Dicht, Feuchte und weitere produktspezifische Größen, während Markenparameter beispielsweise Angaben zu Eigenschaften der stabförmigen Artikel bezeichnen, die mittels der Maschine 10 produziert werden. Die vorbestimmten Maschinenparameter können vorzugsweise über den Touch-Screen manuell vorgegeben bzw. während des Betriebs der Maschine 10 angepasst werden. Die Visualisierungseinheit ist ferner zur Ausgabe und Anzeige der ermittelten Korrekturwerte eingerichtet. Ferner ist das Steuermittel 34 derart eingerichtet, dass auf Basis des Korrekturwerts bzw. auf Basis der Korrekturwerte eine Korrektur zumindest eines der vorbestimmten Maschinenparameter erfolgt. Anders ausgedrückt ist das Steuermittel 34 dazu eingerichtet, auf Basis der in der Analyseeinrichtung 31 ermittelten Korrekturwerte selbsttätig und ohne das externe Eingreifen eines Maschinenführers die vorbestimmten Maschinenparameter derart anzupassen, dass der Produktionsprozess der stabförmigen Artikel 12 hinsichtlich vorgegebener Qualitätsanforderungen optimiert wird.

Gemäß einer zweckmäßigen Weiterbildung der Erfindung umfasst die Analyseeinrichtung 31 eine Fehlertypklassifizierungseinrichtung, die zum Zuordnen der Strangfehlerbilddaten und der Artikelfehlerbilddaten in mehrere vorgegebene Fehlertypklassen ausgebildet und eingerichtet ist. Mit anderen Worten ist die Analyseeinrichtung 31 entsprechend ausgebildet, um die Strangfehlerbilddaten und die Artikelfehlerbilddaten jeweils in Abhängigkeit der erkannten Fehlertypen in verschiedene Fehlertypklassen einzuordnen. Als Fehlertypklassen können beispielsweise die zuvor genannten Fehlerarten dienen. Auf diese Weise können die entsprechenden Bilddaten in Abhängigkeit der festgestellten Fehlerart miteinander in Beziehung gesetzt werden. Ist beispielsweise eine durchstoßene Tabakrippe im Materialstrang 14a, 14b festgestellt worden, so klassifiziert die Analyseeinrichtung 31 die zugehörigen Strangfehlerdaten in die Fehlertypklasse "durchstoßene Tabakrippe". Ebenso wird an dem aus diesem Abschnitt des Materialstrangs 14a, 14b hergestellten stabförmigen Artikel 12 der Fehler "durchstoßene Tabakrippe" zwangsläufig vorhanden sein, so dass das die entsprechenden Artikelfehlerdaten ebenfalls in die Fehlertypklasse "durchstoßende Tabakrippe" mittel der Analyseeinrichtung 31 klassifiziert werden.

Besonders bevorzugt ist die Analyseeinrichtung 31 derart eingerichtet, dass das Analysieren auf Basis der Strangfehlerbilddaten und der Artikelfehlerbilddaten erfolgt, die derselben Fehlertypklasse zugeordnet worden sind. In dem zuvor genannten Beispiel entspricht die Fehlertypklasse der Klasse "durchstoßene Tabakrippe". Das Vorhandensein des Fehler "durchstoßene Tabakrippe" in dem stabförmigen Artikel 12 wird auf diese Weise von der Analyseeinrichtung 31 als schon in einem der Materialstränge 14a, 14b bestehend erkannt, so dass das Steuermittel 34 zu keiner Korrektur veranlassen wird. Alternativ ist die Analyseeinrichtung 31 derart eingerichtet, dass die Analyse auf Basis der Strangfehlerbilddaten einer der vorgegebenen Fehlertypklassen und der Artikelfehlerbilddaten einer anderen der vorgegebenen Fehlertypklassen erfolgt.

Das Steuermittel 34 ist zur Steuerung der Maschine 10 über einen ersten Datenbus 35 mit weiteren Teilsteuereinrichtungen 36, 37, 38 und mit der zweiten Prüfeinrichtung 27 verbunden. Beispielsweise ist die erste Teilsteuereinrichtung 36 der Verteilereinheit 11 und der Strangeinheit 15, die zweite Teilsteuereinrichtung 37 der Filteransetzmaschine 19 und die dritte Teilsteuereinrichtung 38 einer oder mehrere weitere Einrichtungen der Maschine 10 zugeordnet, z.B. einer nicht dargestellten Perforationseinrichtung. Alternativ sind die Teilsteuereinrichtungen zumindest teilweise integraler Bestandteil des Steuermittels 34. Der ersten Teilsteuereinrichtung 36 können weitere Sensormittel 39 zugeordnet sein, beispielsweise zur Bestimmung des Durchmessers des Materialstrangs 14.

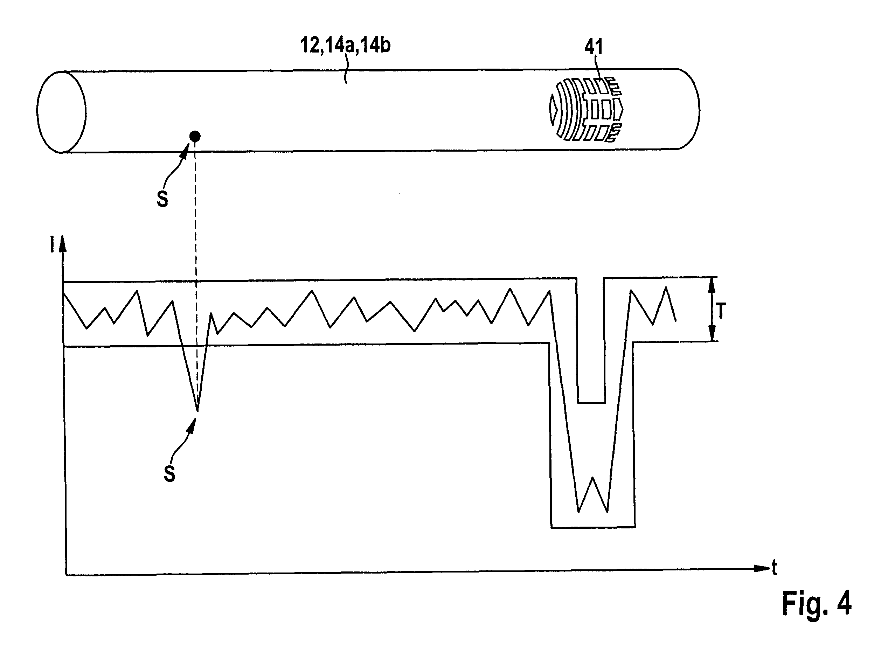

Gemäß einer besonders bevorzugten Weiterbildung der Erfindung umfasst die Steuervorrichtung 11 weiter einen Stempelpositionssensor 40a, 40b. Der zumindest eine Stempelpositionssensor 40a, 40b ist zum Ermitteln eines Stempeldrucks 41 auf dem mindestens einen Materialstrang 14a, 14b und/oder den stabförmigen Artikeln 12 eingerichtet und ausgebildet. Der mindestens eine Stempelpositionssensor 40a, 40b ist vorzugsweise als optischer Sensor ausgebildet. Die Figur 4 zeigt einen typischen mittleren Helligkeitsverlauf eines optisch vermessenen Abschnitts des Materialstrangs 14a, 14b bzw. eines der stabförmigen Artikel 12. Im Bereich des Stempeldrucks 41 weist der beispielhaft gezeigte Messwertverlauf eine signifikante Abweichung vom mittleren Helligkeitsverlauf auf. Anhand dieser Abweichung wird mittels des Stempelpositionssensors 40 eine Aufdruckposition ermittelt. Auf Basis der ermittelten Aufdruckposition wird mittels einer Positionsbestimmungseinrichtung die relative Position des stabförmigen Artikels 12 bezüglich des zweiten optoelektronischen Sensormittels 18 zum jeweiligen Abtastzeitpunkt des zweiten optoelektronischen Sensormittels 18 bestimmt. Alternativ ist der Stempelpositionssensor 40 an dem Materialstrang 14 angeordnet. In diesem Fall gilt das zuvor Gesagte für die relative Position des Materialsstrangs 14 bezüglich des ersten optoelektronischen Sensormittels 13 zum jeweiligen Abtastzeitpunkt. Anders ausgedrückt, sind der Stempelpositionssensor 40 und die Positionsbestimmungseinrichtung derart ausgebildet und eingerichtet, dass eine präzise Bestimmung der relativen Position des Materialstrangs 14 und/oder des stabförmigen Artikels 12 zu den jeweiligen Abtastzeitpunkten ermöglicht wird, also zu denjenigen Zeitpunkten an denen mittels der ersten bzw. zweiten optoelektronischen Sensormittel 13a, 13b, 18a, 18b die Bildaufnahme erfolgt. Die Abtastzeitpunkte, zu denen mittels des ersten optoelektronischen Sensormittels 13a, 13b eine Abtastung erfolgt, sind vorzugsweise durch die Schnittposition bzw. den Schnittzeitpunkt festgelegt, an welchem die Materialstränge 14a, 14b in Tabakstöcke 16a, 16b doppelter Gebrauchslänge geschnitten werden.

Eine bevorzugte Weiterbildung der Erfindung zeichnet sich dadurch aus, dass die Vorrichtung eine Vergleichseinrichtung umfasst, die zum Vergleichen der relativen Position des Materialstrangs 14 und/oder des stabförmigen Artikels 12 mit einer vorgegebenen Position ausgebildet und eingerichtet ist. Im Fall einer Abweichung zwischen der relativen Position und der vorgegebenen Position ist die Vergleichseinrichtung ferner dazu eingerichtet und ausgebildet, anhand der ermittelten relativen Position die Strangbilddaten und/oder die Artikelbilddaten zu korrigieren. Die vorgegebene Position bezeichnet dabei eine festgelegte Position, in der sich der Materialstrang 14 und/oder der stabförmigen Artikeln 12 zum Abtastzeitpunkt des jeweiligen ersten bzw. zweiten optoelektronischen Sensormittels 13, 18 idealer Weise befinden sollte, um eine optimale optische Abtastung zu gewährleisten. Aufgrund von Toleranzen kann es zu Abweichungen der realen Position des Materialstrangs 14 und/oder der stabförmigen Artikel 12 zu den besagten Abtastzeitpunkten kommen. Die zuvor beschriebene Vergleichseinrichtung ist derart ausgebildet, dass in Abhängigkeit einer erkannten Positionsabweichung die Strangbilddaten und/oder Artikelbilddaten entsprechend korrigiert werden. Diese Korrektur kann beispielsweise durch Verschieben der Strangbilddaten und/oder Artikelbilddaten um eine der Abweichung entsprechende Anzahl an Bildpunkten erfolgen.

Eine bevorzugte Weiterbildung der Erfindung umfasst weiter eine Speichereinrichtung zum kontinuierlichen und/oder selektiven Zwischenspeichern zumindest eines Datentyps aus der Gruppe der Strangfehlerbilddaten, der Stranggutbilddaten und der Artikelgutbilddaten. Besonders bevorzugt umfasst die Speichereinrichtung vier Speichermittel 42, 43, 44 und 45. Die ersten und zweiten Speichermittel 42, 43 sind zwischen der ersten Prüfeinrichtung 23 und der Analyseeinrichtung 31 angeordnet, wobei dem ersten Speichermittel 42 über den Ausgang 25 der ersten Prüfeinrichtung 23 die Strangfehlerbilddaten und dem zweiten Speichermittel 43 über den Ausgang 26 der ersten Prüfeinrichtung 23 Stranggutbilddaten zugeführt werden. Analog dazu sind die dritten und vierten Speichermitteln 44, 45 zwischen der zweiten Prüfeinrichtung 27 und der Analyseeinrichtung 31 angeordnet. Alle Speichermittel 42, 43, 44 und 45 sind über entsprechende Datenübertragungseinrichtungen mit den genannten Prüfeinrichtungen 23, 27 und der Analyseeinrichtung 31 verbunden. Optional umfasst die Speichereinrichtung ein Langzeitarchiv 46 zur Speicherung sämtlicher oder ausgewählter Strangfehlerbilddaten, Stranggutbilddaten, Artikelfehlerbilddaten und/oder Artikelgutbilddaten. Mittels der mit der Analyseeinrichtung 31 verbundenen Speichereinrichtung ist es einerseits möglich, die Analyse aktueller mittels der ersten und zweiten optoelektronischen Sensormittel 13a, 13b, 18a, 18b erzeugten Bilddaten zusätzlich in Bezug zu bereits klassifizierten Bilddaten zu setzen und diese in das Analyseergebnis einfließen zu lassen. Andererseits sind insbesondere die ersten und zweiten Speichermittel 42, 43 vorzugsweise als FIFO-Speicher ausgebildet, um die Laufzeit des jeweiligen Materialstrangabschnitts 14 von der Abtastung an einer der ersten optoelektronischen Sensormittel 13a, 13b bis zur erneuten Abtastung des daraus gefertigten stabförmigen Artikels 12 an dem mindestens einen zweiten optoelektronischen Sensormittel 18a, 18b Rechnung zu tragen.

Bevorzugt umfasst die Steuerungsvorrichtung 30 eine Bewertungseinrichtung 47, die derart eingerichtet und ausgebildet ist, dass auf Basis der in der Analyseeinrichtung 31 ermittelten Korrekturwerte bzw. der Strangfehlerbilddaten und/oder der Strangsollbilddaten eine Bewertung der Qualität des Materialstrang 14 oder Teilkomponenten des Materialsstrangs 14 erfolgt. Die mittels der Bewertungseinrichtung 47 ermittelten Qualität des Materialstrangs 14 oder dessen Teilkomponenten kann optional mittels einer Schnittstelle 48 direkt an den Lieferanten übermittelt werden.

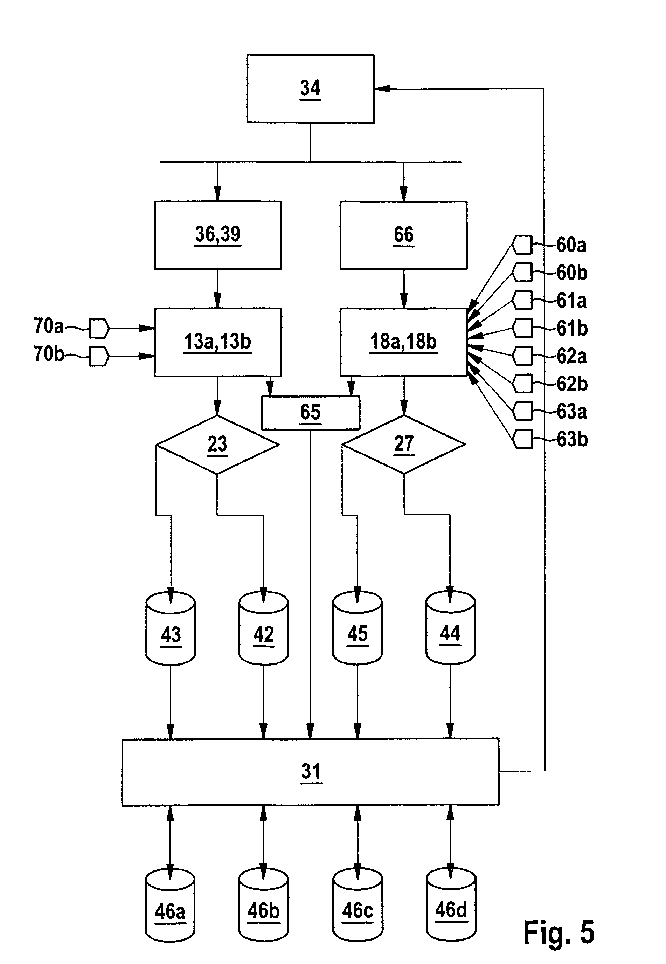

Die Figur 5 zeigt ergänzend zu den vorgenannten Figuren 1 bis 4 ein Ablaufdiagramm des Grundprinzips der erfindungsgemäßen Steuerungsvorrichtung sowie des Steuerungsverfahrens. Über das Steuermittel 34 werden die erste Teilsteuerung 36 sowie die Teilsteuerung 66 gesteuert. Die Teilsteuerung 36 ist den ersten optischen Sensormitteln 13a, 13b zugeordnet, während die Teilsteuerung 66 den zweiten Sensormitteln 18a, 18b zugeordnet ist. Optional umfasst die Teilsteuerung 36 weitere Sensormittel. Die ersten optoelektronischen Sensormittel 13a, 13b tasten die Oberfläche der Materialstränge 14a, 14b mittels einem oder mehreren Bildsensoren 70a, 70b ab, während die zweiten optoelektronischen Sensormittel 18a, 18b mittels der Teilbildkameras 60a, 60b, 61a, 61b bzw. der Teilbildkameras 62a, 62b, 63a, 63b die entsprechenden stabförmigen Artikel 12 optisch abtasten. Vorzugsweise werden die Strangbilddaten eines jeden Abschnitts des mindestens einen Materialstrangs 14a, 14b zu den Artikelbilddaten eines jeweils zugehörigen stabförmigen Artikels 12 mittels der Zuordnungseinrichtung 65 einander zugeordnet und anschließend ein entsprechendes Bilddatenpaar erzeugt, das die jeweiligen Artikelbilddaten und die jeweiligen Strangbilddaten umfasst. Der Analyseeinrichtung 31 werden folglich neben den Artikelgutbilddaten, den Artikelfehlerbilddaten, den Stranggutbilddaten sowie den Strangfehlerbilddaten ferner die Bilddatenpaare als Ausgangsbasis für eine Analyse bzw. Nachklassifikation zugeführt. Besonders bevorzugt erfolgt das Analysieren auf Basis der Stranggutbilddaten mit Referenzbildern des ersten und zweiten Materialstrangs, also basierend auf zuvor in der Analyseeinrichtung 31 gespeicherten Referenzbildern. Als Referenzbilder kommen beispielsweise Bilder zum Einsatz, die manuell vorselektiert worden sind. Alternativ erfolgt das Analysieren auf Basis der Strangfehlerbilddaten des ersten Materialstrangs 14a mit den Strangfehlerbilddaten des weiteren Materialstrangs 14b. Grundsätzlich ist jedoch auch jede andere mögliche Verknüpfung von Bilddaten, die der Analyseeinrichtung 31 zugeführt werden, als Basis für das Durchführen der Analyse geeignet. Optional werden die Artikelgutbilddaten, die Artikelfehlerbilddaten, die Stranggutbilddaten und die Strangfehlerbilddaten in mehreren Langzeitarchivspeichern 46a, 46b, 46c, 46d gespeichert. Somit ist es möglich, die Analyse zusätzlich auf archivierte Bilddaten aus den Langzeitarchivspeichern 46a, 46b, 46c, 46d zu stützen. In Bezug auf den dargestellten weiteren Verfahrensablauf sei auf die vorangehend gemachten Ausführungen zur erfindungsgemäßen Vorrichtung verwiesen, in denen zugleich das erfindungsgemäße Steuerungsverfahren näher erläutert wird.

## Patentansprüche

1. Steuerungsvorrichtung (30) für eine Maschine (10) oder eine Maschinenkombination (10, 19) zur Herstellung stabförmiger Artikel (12) der Tabak verarbeitenden Industrie aus zumindest einem ersten Materialstrang (14a, 14b), umfassend
zumindest ein erstes optoelektronisches Sensormittel (13a, 13b), wobei das erste Sensormittel (13a, 13b) zum Erzeugen von Strangbilddaten zumindest eines Teiloberflächenbereichs des ersten Materialstrangs (14a, 14b) ausgebildet und eingerichtet ist,
mindestens ein zweites optoelektronisches Sensormittel (18a, 18b), wobei das zweite Sensormittel (18a, 18b) zum Erzeugen von Artikelbilddaten zumindest eines Teiloberflächenbereichs der stabförmigen Artikel (12) ausgebildet und eingerichtet ist,
eine erste Prüfeinrichtung (23), die mit mindestens einem der ersten Sensormittel (13a, 13b) mittels einer ersten Datenübertragungseinrichtung (24) verbunden ist, wobei die erste Prüfeinrichtung (23) zum Prüfen der Strangbilddaten und zum Klassifizieren der Strangbilddaten als Strangfehlerbilddaten, sofern bei dem Prüfen zumindest ein fehlerhafter Bereich des Materialstrangs festgestellt wird, andernfalls zum Klassifizieren der Strangbilddaten als Stranggutbilddaten ausgebildet und eingerichtet ist,
eine zweite Prüfeinrichtung (27), die mit mindestens einem der zweiten Sensormittel (18a, 18b) mittels einer zweiten Datenübertragungseinrichtung (28) verbunden ist, wobei die zweite Prüfeinrichtung (27) zum Prüfen der stabförmigen Artikel (12) und zum Klassifizieren der Artikelbilddaten als Artikelfehlerbilddaten, sofern bei dem Prüfen zumindest ein fehlerhafter Bereich der stabförmigen Artikel festgestellt wird, andernfalls zum Klassifizieren der Artikelbilddaten als Artikelgutbilddaten ausgebildet und eingerichtet ist,
eine Analyseeinrichtung (31), die mit der ersten Prüfeinrichtung (23) und der zweiten Prüfeinrichtung (27) mittels einer dritten Datenübertragungseinrichtung (32) verbunden ist und derart eingerichtet und ausgebildet ist, dass eine Analyse zumindest einer Bilddatenart aus der Gruppe der Strangfehlerbilddaten, der Stranggutbilddaten, der Artikelfehlerbilddaten und/oder der Artikelgutbilddaten mittels Referenzbilddaten und/oder eines Maschinenmodells unter Berechnung zumindest eines Korrekturwerts erfolgt,
ein Steuerungsmittel (34), das mit der Analyseeinrichtung (31) mittels einer weiteren Datenübertragungseinrichtung (33) verbunden ist und derart eingerichtet und ausgebildet ist, dass auf Basis des Korrekturwerts eine Korrektur zumindest eines vorbestimmten Parameters der ersten Prüfeinrichtung (23) und/oder der zweiten Prüfeinrichtung (27) erfolgt
wobei
die Steuerungsvorrichtung (30) weiter eine Zuordnungseinrichtung (65), die mit mindestens einem der ersten optoelektronischen Sensormittel (13a, 13b) und mindestens einem der zweiten optoelektronischen Sensormittel (18a, 18b) verbunden ist und zum Zuordnen der Strangbilddaten eines jeden Abschnitts des mindestens einen Materialstrangs (14a, 14b) zu den Artikelbilddaten der jeweils zugehörigen stabförmigen Artikels (12) und Erzeugen eines Bilddatenpaares, wobei jedes der Bilddatenpaare die jeweiligen Artikelbilddaten und die jeweiligen Strangbilddaten umfasst, ausgebildet und eingerichtet ist, umfasst, wobei die Bilddatenpaare der Analyseeinrichtung (31) als Ausgangsbasis für eine Analyse zugeführt werden.

2. Steuerungsvorrichtung nach Anspruch 1, **dadurch gekennzeichnet, dass** jedes der zweiten Sensormittel (18a, 18b) mindestens zwei, vorzugsweise vier Bildsensoren (60a, 60b, 61a, 61b, 62a, 62b, 63a, 63b) umfasst, wobei jeder Bildsensor (60a, 60b, 61a, 61b, 62a, 62b, 63a, 63b) einem Teilabschnitt des mindestens einen Teiloberflächenbereichs der stabförmigen Artikel (12) zugeordnet ist.

3. Steuerungsvorrichtung nach Anspruch 2, **dadurch gekennzeichnet, dass** die Bildsensoren (60a, 60b, 61a, 61b, 62a, 62b, 63a, 63b) mit einer Zusammenführungseinrichtung verbunden sind, die zum Zusammenführen der von den Bildsensoren (60a, 60b, 61a, 61b, 62a, 62b, 63a, 63b) abgetasteten Teilabschnitte zu einem durch die Artikelbilddaten repräsentierten Gesamtbild des mindestens einen Teiloberflächenbereichs ausgebildet und eingerichtet ist.

4. Steuerungsvorrichtung nach Anspruch 1 bis 3, **dadurch gekennzeichnet, dass** die Analyseeinrichtung (31) eine Fehlertypklassifizierungseinrichtung umfasst, die zum Zuordnen der Strangfehlerbilddaten und der Artikelfehlerbilddaten in mehrere vorgegebene Fehlertypklassen ausgebildet und eingerichtet ist.

5. Steuerungsvorrichtung nach einem der Ansprüche 1 bis 4, weiter umfassend
einen Stempelpositionssensor (40a, 40b), der zum Ermitteln einer Aufdruckposition eines Stempeldrucks auf dem mindestens einen Materialstrang (14a, 14b) und/oder dem stabförmigen Artikel (12) eingerichtet und ausgebildet ist, und
eine Positionsbestimmungseinrichtung, die zum Ermitteln einer relativen Position des mindestens einen Materialstrangabschnitts und/oder des stabförmigen Artikels (12) bezüglich des ersten Sensormittels (13a, 13b) und/oder der zweiten Sensormittels (18a, 18b) zu einem jeweiligen Abtastzeitpunkt des ersten und/oder des zweiten Sensormittels (13a, 13b, 18a, 18b) basierend auf der ermittelten Aufdruckposition eingerichtet und ausgebildet ist.

6. Steuerungsvorrichtung nach Anspruch 5, weiter umfassend
eine Vergleichseinrichtung, die zum Vergleichen der relativen Position des Materialstrangabschnitts und/oder des stabförmigen Artikels (12) mit einer vorgegebenen Position und im Fall einer Abweichung zwischen der relativen Position und der vorgegebenen Position zum Korrigieren der Strangbilddaten und/oder der Artikelbilddaten anhand der ermittelten relativen Position ausgebildet und eingerichtet ist.

7. Steuerungsvorrichtung nach einem der Ansprüche 1 bis 6, weiter umfassend
zumindest eine Speichereinrichtung (42, 43, 44, 45, 46), die zum kontinuierlichen und/oder selektiven Zwischenspeichern zumindest eines Datentyps aus der Gruppe der Strangfehlerbilddaten, der Stranggutbilddaten, der Artikelfehlerbilddaten und der Artikelgutbilddaten angepasst und eingerichtet ist.

8. Steuerungsverfahren für eine Maschine oder eine Maschinenkombination (10, 19) zur Herstellung stabförmiger Artikel (12) der Tabak verarbeitenden Industrie aus zumindest einem Materialstrang (14a, 14b), umfassend die Schritte:
- optisches Abtasten zumindest eines der Materialstränge (14a, 14b) mittels mindestens eines ersten optoelektronischen Sensormittels (13a, 13b) und Erzeugen von Strangbilddaten, wobei die Strangbilddaten zumindest einem Teiloberflächenbereich des Materialstrangs (14a, 14b) zugeordnet sind,
- optisches Abtasten der stabförmigen Artikel (12) mittels mindestens einem zweiten optoelektronischen Sensormittels (18a, 18b) und Erzeugen von Artikelbilddaten, wobei die Artikelbilddaten zumindest einem Teiloberflächenbereich der stabförmigen Artikel (12) zugeordnet sind,
- Prüfen der Strangbilddaten des mindestens einen Materialstrangs (14a, 14b) und Klassifizieren der Strangbilddaten als Strangfehlerbilddaten, sofern bei dem Prüfen zumindest ein fehlerhafter Bereich des mindestens einen Materialstrangs (14a, 14b) festgestellt wird, andernfalls Klassifizieren der Strangbilddaten als Stranggutbilddaten,
- Prüfen der Artikelbilddaten der stabförmigen Artikel (12) und Klassifizieren der Artikelbilddaten als Artikelfehlerbilddaten, sofern bei dem Prüfen zumindest ein fehlerhafter Bereich der stabförmigen Artikel (12) festgestellt wird, andernfalls Klassifizieren der Artikelbilddaten als Artikelgutbilddaten,
- Analysieren zumindest einer Datenart aus der Gruppe der Strangfehlerbilddaten, der Stranggutbilddaten, der Artikelfehlerbilddaten und/oder der Artikelgutbilddaten mittels Referenzbilddaten und/oder eines Maschinenmodells unter Berechnung zumindest eines Korrekturwerts,
- Korrigieren zumindest eines vorbestimmten Parameters der Maschine mittels des Korrekturwerts,
wobei das
Steuerungsverfahren das Zuordnen der Strangbilddaten eines jeden Abschnitts des mindestens einen Materialstrangs (14a, 14b) zu den Artikelbilddaten eines jeweils zugehörigen stabförmigen Artikels (12), das Erzeugen eines Bilddatenpaares umfassend die jeweiligen Artikelbilddaten und die jeweiligen Strangbilddaten und das Zuführen der Bilddatenpaare der Analyseeinrichtung (31) als Ausgangsbasis für eine Analyse umfasst.

9. Steuerungsverfahren nach Anspruch 8, weiter umfassend
Zuordnen der Strangfehlerbilddaten und der Artikelfehlerbilddaten in mehrere vorgegebene Fehlertypklassen.

10. Steuerungsverfahren nach einem der Ansprüche 8 oder 9, umfassend das unabhängige Analysieren auf Basis der Strangfehlerbilddaten des ersten und zweiten Materialstrangs (14a, 14b) und der zugeordneten Artikelfehlerbilddaten, wobei die Strangfehlerbilddaten und die Artikelfehlerbilddaten derselben Fehlertypklasse zugeordnet sind.

11. Steuerungsverfahren nach einem der Ansprüche 8 bis 10, umfassend das Analysieren auf Basis der Stranggutbilddaten mit Referenzbildern des ersten und zweiten Materialstrangs (14a, 14b).

12. Steuerungsverfahren nach einem der Ansprüche 8 bis 10, umfassend das Analysieren auf Basis der Strangfehlerbilddaten des ersten Materialstrangs (14a) mit den Strangfehlerbilddaten des weiteren Materialstrangs (14b).

13. Steuerungsverfahren nach einem der Ansprüche 8 bis 12, weiter umfassend
- Ermitteln einer Aufdruckposition eines Stempeldrucks auf dem Materialstrang (14a, 14b) und/oder auf dem stabförmigen Artikel (12) mittels eines Stempelpositionssensors (40a, 40b), und
- Ermitteln einer relativen Position eines vorbestimmten Abschnitts des mindestens einen Materialstrangs (14a, 14b) und/oder des stabförmigen Artikels (12) bezüglich des ersten Sensormittels (13) und/oder des zweiten Sensormittels (18) zu einem jeweiligen Abtastzeitpunkt des ersten und/oder des zweiten Sensormittels (13, 18) basierend auf der ermittelten Aufdruckposition.

14. Steuerungsverfahren nach Anspruch 13 weiter umfassend
- Vergleichen der relativen Position des vorbestimmten Abschnitts des mindestens einen Materialstrangs (14a, 14b) und/oder des stabförmigen Artikels (12) mit einer vorgegebenen Position und
- in dem Fall einer Abweichung zwischen der relativen Position und der vorgegebenen Position Korrigieren der Strangbilddaten und/oder der Artikelbilddaten anhand der ermittelten relativen Position.

15. Steuerungsverfahren nach einem der Ansprüche 8 bis 14, weiter umfassend
ein kontinuierliches oder diskontinuierliches Zwischenspeichern zumindest eines Bilddatentyps aus der Gruppe der Strangfehlerbilddaten, der Strangssollbilddaten, der Artikelfehlerbilddaten und der Artikelsollbilddaten.

## Claims

1. Control apparatus (30) for a machine (10) or a combination of machines (10, 19) for the production of rod-shaped articles (12) of the tobacco-processing industry from at least a first material rod (14a, 14b), comprising
at least a first optoelectronic sensor means (13a, 13b), wherein the first sensor means (13a, 13b) is formed and set up to generate rod image data at least of a partial surface region of the first material rod (14a, 14b),
at least a second optoelectronic sensor means (18a, 18b), wherein the second sensor means (18a, 18b) is formed and set up to generate article image data at least of a partial surface region of the rod-shaped articles (12),
a first inspection unit (23) which is connected to at least one of the first sensor means (13a, 13b) by means of a first data transmission device (24), wherein the first inspection unit (23) is formed and set up to inspect the rod image data and classify the rod image data as imperfect rod image data, in so far as at least one imperfect region of the material rod is ascertained during inspection, otherwise to classify the rod image data as good rod image data,
a second inspection unit (27) which is connected to at least one of the second sensor means (18a, 18b) by means of a second data transmission device (28), wherein the second inspection unit (27) is formed and set up to inspect the rod-shaped articles (12) and to classify the article image data as imperfect article image data, in so far as at least one imperfect region of the rod-shaped articles is ascertained during inspection, otherwise to classify the article image data as good article image data,
an analysis means (31) which is connected to the first inspection unit (23) and the second inspection unit (27) by means of a third data transmission device (32) and is set up and formed in such a manner that an analysis is carried out at least of an image data type from the group of imperfect rod image data, good rod image data, imperfect article image data and/or good article image data by means of reference image data and/or of a machine model with calculation of at least one correction value,
a control means (34) which is connected to the analysis means (31) by means of a further data transmission device (33) and is set up and formed in such a manner that a correction of at least one predetermined parameter of the first inspection unit (23) and/or the second inspection unit (27) is carried out on the basis of the correction value
wherein
the control apparatus (30) further comprises an assignment unit (65), which is connected to at least one of the first optoelectronic sensor means (13a, 13b) and at least one of the second optoelectronic sensor means (18a, 18b) and is formed and set up for assignment of the rod image data of each portion of the at least one material rod (14a, 14b) to the article image data of the respectively associated rod-shaped articles (12) and generating an image data pair, wherein each of the image data pairs comprises the respective article image data and the respective rod image data, wherein the image data pairs are supplied to the analysis means (31) as a starting basis for an analysis.

2. Control apparatus according to Claim 1, **characterised in that** each of the second sensor means (18a, 18b) comprises at least two, preferably four image sensors (60a, 60b, 61a, 61b, 62a, 62b, 63a, 63b), wherein each image sensor (60a, 60b, 61a, 61b, 62a, 62b, 63a, 63b) is assigned to a sub-portion of the at least one partial surface region of the rod-shaped articles (12).

3. Control apparatus according to Claim 2, **characterised in that** the image sensors (60a, 60b, 61a, 61b, 62a, 62b, 63a, 63b) are connected to a combination unit which is formed and set up to combine the sub-portions sampled by the image sensors (60a, 60b, 61a, 61b, 62a, 62b, 63a, 63b) to form a full image, represented by the article image data, of the at least one partial surface region.

4. Control apparatus according to Claim 1 to 3, **characterised in that** the analysis means (31) comprises an error type classification unit which is formed and set up to assign the imperfect rod image data and the imperfect article image data into several predefined error type classes.

5. Control apparatus according to any one of Claims 1 to 4, further comprising
a stamp position sensor (40a, 40b) which is set up and formed to determine an imprint position of a stamp pressure on the at least one material rod (14a, 14b) and/or the rod-shaped article (12), and
a position determination unit which is set up and formed to determine a relative position of the at least one material rod portion and/or of the rod-shaped article (12) in relation to the first sensor means (13a, 13b) and/or the second sensor means (18a, 18b) at a respective sampling time of the first and/or second sensor means (13a, 13b, 18a, 18b) based on the determined imprint position.

6. Control apparatus according to Claim 5, further comprising
a comparison unit which is formed and set up to compare the relative position of the material rod portion and/or the rod-shaped article (12) with a predefined position and in the case of a deviation between the relative position and the predefined position for correction of the rod image data and/or the article image data on the basis of the determined relative position.

7. Control apparatus according to any one of Claims 1 to 6, further comprising
at least one storage unit (42, 43, 44, 45, 46) which is adapted and set up for continuous and/or selective interim storage at least of one data type from the group of imperfect rod image data, good rod image data, imperfect article image data and good article image data.

8. Control method for a machine or a combination of machines (10, 19) for the production of rod-shaped articles (12) of the tobacco-processing industry from at least one material rod (14a, 14b), comprising the steps:
- optical sampling of at least one of the material rods (14a, 14b) by means of at least a first optoelectronic sensor means (13a, 13b) and generating rod image data, wherein the rod image data are assigned at least to a partial surface region of the material rod (14a, 14b),
- optical sampling of the rod-shaped articles (12) by means of at least a second optoelectronic sensor means (18a, 18b) and generating article image data, wherein the article image data are assigned at least to a partial surface region of the rod-shaped articles (12),
- inspecting the rod image data of the at least one material rod (14a, 14b) and classifying the rod image data as imperfect rod image data, in so far as at least one imperfect region of the at least one material rod (14a, 14b) is ascertained during inspection, otherwise classifying the rod image data as good rod image data,
- inspecting the article image data of the rod-shaped articles (12) and classifying the article image data as imperfect article image data, in so far as at least one imperfect region of the rod-shaped articles (12) is ascertained during inspection, otherwise classifying the article image data as good article image data,
- analysing at least one data type from the group of imperfect rod image data, good rod image data, imperfect article image data and/or good article image data by means of reference image data and/or a machine model with calculation of at least one correction value,
- correcting at least one predetermined parameter of the machine by means of the correction value,
wherein the
control method comprises the assignment of the rod image data of each portion of the at least one material rod (14a, 14b) to the article image data of a respectively associated rod-shaped article (12), the generation of an image data pair comprising the respective article image data and the respective rod image data and the supply of the image data pairs of the analysis means (31) as a starting basis for an analysis.

9. Control method according to Claim 8, further comprising
assigning the imperfect rod image data and the imperfect article image data into several predefined error type classes.

10. Control method according to any one of Claims 8 or 9, comprising the independent analysis on the basis of the imperfect rod image data of the first and second material rod (14a, 14b) and the assigned imperfect article image data, wherein the imperfect rod image data and the imperfect article image data are assigned to the same error type class.

11. Control method according to any one of Claims 8 to 10, comprising the analysis on the basis of the good rod image data with reference images of the first and second material rod (14a, 14b).

12. Control method according to any one of Claims 8 to 10, comprising the analysis on the basis of the imperfect rod image data of the first material rod (14a) with the imperfect rod image data of the further material rod (14b).

13. Control method according to any one of Claims 8 to 12, further comprising
- determining an imprint position of a stamp pressure on the material rod (14a, 14b) and/or on the rod-shaped article (12) by means of a stamp position sensor (40a, 40b), and
- determining a relative position of a predetermined portion of the at least one material rod (14a, 14b) and/or of the rod-shaped article (12) in relation to the first sensor means (13) and/or the second sensor means (18) at a respective sampling time of the first and/or second sensor means (13, 18) based on the determined imprint position.

14. Control method according to Claim 13 further comprising
- comparing the relative position of the predetermined portion of the at least one material rod (14a, 14b) and/or of the rod-shaped article (12) with a predefined position and
- in the case of a deviation between the relative position and the predefined position, correction of the rod image data and/or the article image data on the basis of the determined relative position.

15. Control method according to any one of Claims 8 to 14, further comprising a continuous or discontinuous interim storage of at least one image data type from the group of imperfect rod image data, setpoint rod image data, imperfect article image data and setpoint article image data.

## Revendications

1. Dispositif de commande (30) pour une machine (10) ou une combinaison de machines (10, 19) pour la fabrication d'articles de l'industrie de traitement du tabac en forme de tige (12) à partir d'au moins un premier boudin de matériau (14a, 14b), comprenant
au moins un premier moyen capteur optoélectronique (13a, 13b), le premier moyen capteur (13a, 13b) étant formé et agencé pour engendrer des données d'image de boudin d'au moins une zone d'une partie de surface du premier boudin de matériau (14a, 14b),
au moins un deuxième moyen capteur optoélectronique (18a, 18b), le deuxième moyen capteur (18a, 18b) étant formé et agencé pour engendrer des données d'image d'article d'au moins une zone d'une partie de surface des articles en forme de tige (12),
un premier dispositif d'examen (23) qui est relié à au moins un des premiers moyens capteurs (13a, 13b) à l'aide d'un premier dispositif de transmission de données (24), le premier dispositif d'examen (23) étant formé et agencé pour examiner les données d'image de boudin et pour classer les données d'image de boudin comme données d'image d'erreur de boudin lorsque, lors de l'examen, au moins une zone défectueuse du boudin de matériau est constatée, si non pour classer les données d'image de boudin comme données d'image positive de boudin,
un deuxième dispositif d'examen (27) qui est relié à au moins un des deuxièmes moyens capteurs (18a, 18b) à l'aide d'un deuxième dispositif de transmission de données (28), le deuxième dispositif d'examen (27) étant formé et agencé pour examiner les articles en forme de tige (12) et pour classer les données d'image d'article comme données d'image d'erreur d'article lorsque, lors de l'examen, au moins une zone défectueuse de l'article est constatée, si non pour classer les données d'image d'article comme données d'image positive d'article,
un dispositif d'analyse (31) qui est relié au premier dispositif d'examen (23) et au deuxième dispositif d'examen (27) à l'aide d'un troisième dispositif de transmission de données (32) et qui est agencé et formé de façon qu'une analyse d'au moins un type de données d'image du groupe des données d'image d'erreur de boudin, des données d'image positive de boudin, des données d'image d'erreur d'article et/ou des données d'image positive d'article soit effectuée à l'aide de données d'image de référence et/ou d'un modèle de machine, en calculant au moins une valeur de correction,
un moyen de commande (34) qui est relié au dispositif d'analyse (31) à l'aide d'un autre dispositif de transmission de données (33) et qui est agencé et formé de façon que, sur la base de la valeur de correction, une correction d'au moins un paramètre prédéterminé du premier dispositif d'examen (23) et/ou du deuxième dispositif d'examen (27) soit effectuée,
où
le dispositif de commande (30) comprend en outre un dispositif d'association (65) qui est relié à au moins un des premiers moyens capteurs optoélectroniques (13a, 13b) et à au moins un des deuxièmes moyens capteurs optoélectroniques (18a, 18b) et est formé et agencé pour associer les données d'image de boudin de chaque portion de l'au moins un boudin de matériau (14a, 14b) aux données d'image d'article de l'article correspondant en forme de tige (12) et pour former une paire de données d'image, chaque paire de données d'image comprenant les données d'image d'article respectifs et les données d'image de boudin respectifs,
les paires de données d'image étant acheminées au dispositif d'analyse (31) comme base de départ pour une analyse.

2. Dispositif de commande selon la revendication 1, **caractérisé en ce que** chacun des deuxièmes moyens capteurs (18a, 18b) comprend au moins deux, de préférence quatre capteurs d'image (60a, 60b, 61a, 61b, 62a, 62b, 63a, 63b), chaque capteur d'image (60a, 60b, 61a, 61b, 62a, 62b, 63a, 63b) étant associé à une portion de l'au moins une zone d'une partie de surface des articles en forme de tige (12).

3. Dispositif de commande selon la revendication 2, **caractérisé en ce que** les capteurs d'image (60a, 60b, 61a, 61b, 62a, 62b, 63a, 63b) sont reliés à un dispositif d'assemblage qui est formé et agencé pour assembler les portions échantillonnées par les capteurs d'image (60a, 60b, 61a, 61b, 62a, 62b, 63a, 63b) pour en faire une image d'ensemble représentée par les données d'image d'article, de l'au moins une zone d'une partie de surface.

4. Dispositif de commande selon les revendications 1 à 3, **caractérisé en ce que** le dispositif d'analyse (31) comprend un dispositif de classement de type d'erreur qui est formé et agencé pour associer les données d'image d'erreur de boudin et les données d'image d'erreur d'article à des classes prédéterminées de types d'erreur.

5. Dispositif de commande selon l'une des revendications 1 à 4, comprenant en outre
un capteur de position de tampon (40a, 40b) qui est formé et agencé pour déterminer une position d'impression d'une impression de tampon sur l'au moins un boudin de matériau (14a, 14b) et/ou sur l'article en forme de tige (12), et
un dispositif de détermination de position qui est formé et agencé pour déterminer une position relative de l'au moins une portion de boudin de matériau et/ou de l'article en forme de tige (12) par rapport au premier moyen capteur (13a, 13b) et/ou du deuxième moyen capteur (18a, 18b) à un moment d'échantillonnage respectif du premier et/ou du deuxième moyen capteur (13a, 13b, 18a, 18b) sur la base de la position d'impression déterminée.

6. Dispositif de commande selon la revendication 5, comprenant en outre
un dispositif de comparaison qui est formé et agencé pour comparer la position relative de la portion de boudin de matériau et/ou de l'article en forme de tige (12) à une position prédéterminée et, en cas de différence entre la position relative et la position prédéterminée, pour corriger les données d'image de boudin et/ou les données d'image d'article sur la base de la position relative déterminée.

7. Dispositif de commande selon l'une des revendications 1 à 6, comprenant en outre
au moins un dispositif de stockage (42, 43, 44, 45, 46) qui est formé et agencé pour un stockage intermédiaire continu et/ou sélectif d'au moins un type de données du groupe des données d'image d'erreur de boudin, des données d'image positive de boudin, des données d'image d'erreur d'article et/ou des données d'image positive d'article.

8. Procédé de commande pour une machine ou une combinaison de machines (10, 19) pour la fabrication d'articles de l'industrie de traitement du tabac en forme de tige (12) à partir d'au moins un premier boudin de matériau (14a, 14b), comprenant les étapes :
- échantillonnage optique d'au moins un des boudins de matériau (14a, 14b) à l'aide d'au moins un premier moyen capteur optoélectronique (13a, 13b), et génération de données d'image de boudin, le données d'image de boudin étant associées à au moins une zone d'une partie de surface du premier boudin de matériau (14a, 14b),
- échantillonnage optique de l'article en forme de tige (12) à l'aide d'au moins un deuxième moyen capteur optoélectronique (18a, 18b), et génération de données d'image d'article les données d'image d'article étant associées à au moins une zone d'une partie de surface des articles en forme de tige (12),
- examen des données d'image de boudin de l'au moins un boudin de matériau (14a, 14b) et classement des données d'image de boudin comme données d'image d'erreur de boudin lorsque, lors de l'examen, au moins une zone défectueuse du boudin de matériau (14a, 14b) est constatée, si non pour classer les données d'image de boudin comme données d'image positive de boudin,
- examen des données d'image d'article des articles en forme de tige (12) et classement des données d'image d'article comme données d'image d'erreur d'article lorsque, lors de l'examen, au moins une zone défectueuse de l'article en forme de tige (12) est constatée, si non pour classer les données d'image d'article comme données d'image positive d'article,
- analyser au moins un type de données du groupe des données d'image d'erreur de boudin, des données d'image positive de boudin, des données d'image d'erreur d'article et/ou des données d'image positive d'article à l'aide de données d'image de référence et/ou d'un modèle de machine, en calculant au moins une valeur de correction,
- correction d'au moins un paramètre prédéterminé de la machine à l'aide de la valeur de correction,
où
le procédé de commande comprend l'association des données d'image de boudin de chaque portion de l'au moins un boudin de matériau (14a, 14b) aux données d'image d'article d'un article correspondant en forme de tige (12), la formation d'une paire de données d'image comportant les données d'image d'article respectifs et les données d'image de boudin respectifs, et l'acheminement des paires de données d'image au dispositif d'analyse (31) comme base de départ pour une analyse.

9. Procédé de commande selon la revendication 8, comprenant en outre Associer les données d'image d'erreur de boudin et des données d'image d'erreur d'article à des classes prédéterminées de types d'erreur.

10. Procédé de commande selon l'une des revendications 8 ou 9, comprenant l'analyse indépendante sur la base des données d'image d'erreur de boudin du premier et du deuxième boudins de matériau (14a, 14b) et des données d'image d'erreur d'article correspondants, les données d'image d'erreur de boudin et les données d'image d'erreur d'article étant associées à la même classe de type d'erreur.

11. Procédé de commande selon l'une des revendications 8 à 10, comprenant l'analyse sur la base des données d'image positive de boudin à l'aide d'images de référence du premier et du deuxième boudins de matériau (14a, 14b).

12. Procédé de commande selon l'une des revendications 8 à 10, comprenant l'analyse sur la base des données d'image d'erreur de boudin du premier boudin de matériau (14a) à l'aide des données d'image d'erreur de l'autre boudin de matériau (14b).

13. Procédé de commande selon l'une des revendications 8 à 12, comprenant en outre
déterminer une position d'impression de tampon sur le boudin de matériau (14a, 14b) et/ou sur l'article en forme de tige (12) à l'aide d'un capteur de position de tampon (40a, 40b) et
déterminer une position relative d'une portion prédéterminée de l'au moins un boudin de matériau (14a, 14b) et/ou de l'article en forme de tige (12) par rapport au premier moyen capteur (13) et/ou du deuxième moyen capteur (18) à un moment d'échantillonnage respectif du premier et/ou du deuxième moyen capteur (13, 18) sur la base de la position d'impression déterminée.

14. Procédé de commande selon la revendication 13, comprenant en outre
comparer la position relative de la portion prédéterminée de l'au moins un boudin de matériau (14a, 14b) et/ou de l'article en forme de tige (12) à une position prédéterminée et,
en cas de différence entre la position relative et la position prédéterminée, corriger les données d'image de boudin et/ou les données d'image d'article sur la base de la position relative déterminée.

15. Procédé de commande selon l'une des revendications 8 à 14, comprenant en outre
un stockage intermédiaire continu et/ou sélectif d'au moins un type de données d'image du groupe des données d'image d'erreur de boudin, des données d'image de consigne de boudin, des données d'image d'erreur d'article et/ou des données d'image de consigne d'article.
